# EUROPÄISCHE PATENTSCHRIFT

(11) **EP 0 252 239 B1**
(45) Veröffentlichungstag und Bekanntmachung des Hinweises auf die Patenterteilung: **11.08.1993**
(21) Anmeldenummer: 87106665.0
(22) Anmeldetag: 07.05.1987
(51) Int. Cl.: B23H 1/02

(54) **Verfahren und Einrichtung zur Überwachung eines Funkenerodier-Prozesses in einer Funkenerodiermaschine**
Method and device for the supervision of a spark erosion process in a spark erosion machine
Procédé et dispositif pour la surveillance d'une opération d'électro-érosion dans une machine d'électro-érosion

(30) Priorität: 04.07.1986 DE 3622520
(43) Veröffentlichungstag der Anmeldung: 13.01.1988
(73) Patentinhaber: Multiform Präzisionsmaschinenbau GmbH, D-82506 Wolfratshausen (DE)
(72) Erfinder: Seerieder, Karl, D-8038 Gröbenzell (DE); Wellner, Eckhard, D-8386 Keisbach (DE)
(74) Vertreter: Englaender, Klaus, Dipl.-Ing.

(56) Entgegenhaltungen:
- DE-A- 3 300 552
- FR-A- 2 210 482

## Beschreibung

Die Erfindung betrifft ein Verfahren der im Oberbegriff des Anspruches 1 und eine Einrichtung der im Oberbegriff des Anspruches 8 genannten Art zur Überwachung eines Funkenerodier-Prozesses in einer Funkenerodiermaschine, wobei der Impulsspannungsverlauf im Arbeitsspalt gemessen und bei einer Abweichung des Ist-Spannungsverlaufes von einen Soll-Spannungsverlauf ein Steuerbefehl erzeugt wird, welcher die Prozeßdaten der Erodiermaschine ändert.

Bei laufenden Funkenerodier-Prozess treten im Erodierspalt Spannungsimpulse auf, die eine charakteristische Verlaufsform aufweisen, und zwar steigt im allgemeinen die Spannung zunächst steil auf eine über der Arbeitsspannung liegende Spannung an, bei der der Funkenweg ionisiert wird, und fällt nach einer bestimmten Zündverzugszeit auf die eigentliche Arbeitsspannung ab, die bis zum Ende der Impulsdauer in wesentlichen bestehen bleibt und dann wieder auf Null abfällt. Die Form dieser Spannungsimpulse erlaubt eine Aussage darüber, ob es sich um einen brauchbaren oder einen in irgendeiner Weise entarteten Impuls handelt.

Es ist schon allgemein bekannt, z. B. die Zündspannung bzw. die Arbeitsspannung sowie die Zündverzugszeit zu messen und bei Abweichungen der gemessenen Werte von vorgegebenen Sollwerten einen Steuerbefehl zu erzeugen, welcher die Prozeßdaten der Funkenerosionsmaschine in der Weise steuert, daß die Ursache der Abweichungen behoben wird.

Es hat sich jedoch gezeigt, daß bei einem normalen, störungsfreien Prozeß die Zündverzugszeit nicht ständig einem bestimmten, idealen Sollwert entspricht, sondern infolge der sich ständig ändernden Spaltbedingungen ständig variiert (Bericht Nr. 175-5/80, Lehrstuhl für Werkzeugmaschinen der TH Aachen). Die Vorgabe eines Sollwertes für die Zündverzugszeit führt dann dazu, daß auch bei normalem Prozeßverlauf wegen der ständigen Abweichungen von diesem Sollwert durch die Steuerungselektronik ständig in den Prozeß eingegriffen wird, was den Wirkungsgrad des Prozesses entscheidend verschlechtert. Die Zündverzugszeit wurde deshalb lange als prozeßsteuernde Größe für ungeeignet gehalten.

Die DE 33 00 552 C2 beschreibt bereits ein Verfahren sowie eine Einrichtung , bei der zwischen Leerlaufimpulsen, normalen Wirkimpulsen, abnormalen Impulsen und Kurschlußimpulsen unterschieden wird. Auf die Leerlaufimpulse und die Kurzschlußimpulse wird in an sich bekannter Weise reagiert. Die Wirkimpulse und die abnormalen Impulse sind durch einen einzigen Grenzwert der Zündverzugszeit voneinander unterschieden. Das Verhältnis der Anzahl abnormaler Impulse zur Anzahl der Wirkimpulse wird ständig überwacht und in Abhängigkeit von diesem Verhältnis werden durch mehrere hintereinander angeordnete Steuereinheiten 14 bis 20 unterschiedliche Strategien zur Regelung des Prozesses veranlaßt. Es hat sich gezeigt, daß die Unterscheidung zwischen Wirkimpulsen einerseits und abnormalen Impulsen andererseits durch einen festgelegten Grenzwert der Zündverzugszeit immer noch zu häufigen Regeleingriffen in den Arbeitsprozeß führt, wodurch der Wirkungsgrad des Prozesses nachteilig beeinflußt wird.

Es ist die Aufgabe der Erfindung, ein Verfahren bzw. eine Einrichtung gemäß dem Oberbegriff des Anspruches 1 bzw. dem Oberbegriff des Anspruches 8 zu schaffen, die eine Verbesserung des Prozeßwirkungsgrades erlauben.

Diese Aufgabe ist erfindungsgemäß durch die im Anspruch 1 bzw. Anspruch 8 beschriebenen Merkmale gelöst.

Man hat erkannt, daß bei störungsfreiem Erodierprozeß nie mehr als eine bestimmte Anzahl, beispielsweise drei bis fünf Impulse einer von den Normalimpulsen abweichenden Art nacheinander entstehen. Erst bei einer Tendenz zur Prozeßentartung steigt die Anzahl der Impulse dieser Art an. Gemäß der Erfindung werden die Impulse bezüglich ihrer Zündverzugszeit sortiert und es werden zwischen normalen und Kurzschlußimpulsen mehrere mittlere Gruppen brauchbarer Impulse gebildet. Die Impulse der mittleren Gruppen und der Gruppe der Kurzschlußimpulse werden laufend gezählt. Tritt in einer Gruppe mehr als eine vorgegebene Grenzanzahl von Impulsen hintereinander auf, so wird ein Steuerbefehl erzeugt, welcher die Prozeßdaten der Erodiermaschine im Sinne einer Normalisierung des Prozesses ändert. Die Einteilung der Gruppen erfolgt nach verschiedenen Gesichtspunkten. Eine zu grobe Einteilung führt dazu, daß eine Prozeßentartung nicht oder zu spät erkannt wird, eine zu feine Einteilung hat unter Umständen eine zu große Empfindlichkeit des Systems zur Folge und erhöht vor allem den technischen Aufwand und damit die Kosten der Maschine.

Im Gegensatz zur DE 33 00 552 C2 sind bei der vorliegenden Erfindung die Leerlaufimpulse und die Normalimpulse (entsprechend den Wirkimpulsen) zu einer ersten Impulsgruppe zusammengefaßt. Die Kurzschlußimpulse bilden wie beim Stand der Technik eine letzte Impulsgruppe. Dazwischen liegen jedoch in Abweichung vom Stand der Technik mehrere Impulsgruppen mit brauchbaren Zündverzugszeiten, von denen im Ausführungsbeispiels die Impulsgruppen mit einer Zündverzugszeit von 0,5 bis 1 µsek. sowie einer Zündverzugszeit von 0 bis 0,5 µsek. dargestellt sind. Die Erfindung läßt es jedoch ohne weiteres zu, mehr als die beiden dargestellten Impulsgruppen zu verwenden. Die Auswertung erfolgt wiederum in Abweichung vom Stand der Technik in der Weise, daß die Impulse aller nicht zur ersten Impulsgruppe gehörenden Impulsgruppen jeweils gezählt und bei Auftreten einer vorgegebenen, absoluten Grenzanzahl von Impulsen in einer Impulsgruppe jeweils ein Steuerbefehl erzeugt wird. Man macht sich dabei die Erkenntnis zunutze, daß die von der ersten, die Leerlauf- sowie Normalimpulse enthaltenden Impulsgruppe abweichenden Impulsgruppen jeweils für eine bestimmte, von der jeweiligen Zündverzugszeit abhängigen Zeit tolerierbar sind und daß erst bei Überschreiten einer Toleranzgrenze eine Steuermaßnahme erforderlich wird. Es werden demnach mehrere, von der jeweiligen Zündverzugszeit abhängige Toleranzgrenzen vorgegeben, innerhalb derer eine Abweichung von einem Normalimpuls geduldet wird. Damit wird verhindert, daß das System ohne Berücksichtigung der jeweiligen Zündverzugszeiten auf jede Überschreitung einer einzigen vorgegebenen Grenze mit Steuerungsmaßnahmen reagiert. Es hat sich gezeigt, daß sich durch die Erfindung der Wirkungsgrad eines Erodierverfahrens beträchtlich steigern läßt, da der Erodierprozeß weniger häufig unterbrochen wird, wobei trotz gelegentlichen Abgleitens des Prozesses in Bereiche geringerer Effizienz die mittlere Effizienz verbessert wird.

Es ist erfindungsgemäß vorgesehen, daß mehrere mittlere Impulsgruppen mit aneinandergrenzenden, insgesamt den ganzen möglichen Zündverzugsbereich abdeckenden Zündverzugszeitbereichen gebildet werden. Die von den verschiedenen Impulsgruppen veranlaßten Steuerbefehle können grundsätzlich gleichartig sein; es besteht jedoch auch die Möglichkeit, den unterschiedlichen Impulsgruppen auch unterschiedliche Steuerbefehle zuzuordnen, da z. B. vor allem die erste Impulsgruppe und die letzte Impulsgruppe jeweils unterschiedliche Tendenzen einer Prozeßänderung anzeigen.

Erfindungsgemäß werden jeweils aufeinanderfolgende Impulse der verschiedenen Impulsgruppen in einer jeweils zugeordneten Zähleinrichtung aufsummiert, bis entweder die den Steuerbefehl auslösende Grenzanzahl von Impulsen erreicht wird oder die Impulsfolge durch Auftreten eines Impulses einer anderen Gruppe unterbrochen wird. Im ersteren Fall wird die Zähleinrichtung nach Ausgabe des Steuerbefehls, im zweiten Fall unmittelbar wieder auf einen Ausgangswert zurückgesetzt.

Es ist erfindungsgemäß vorgesehen, daß die Steuerbefehle jeweils eine Unterbrechung der Zufuhr von Spannungsimpulsen zum Arbeitsspalt bewirken. Diese sogenannte Strompausenstrategie ist im allgemeinen ausreichend, eine Prozeßentartung zu verhindern. In einer Ausgestaltung der Erfindung ist vorgesehen, daß die bei Erreichen der Grenzanzahl von Impulsen der letzten Impulsgruppe ausgelösten Steuerbefehle ein Abheben der Arbeitselektrode vom Werkstück bewirken. Die letzte Impulsgruppe mit verschwindendem Zündverzugsbereich ist besonders kritisch und zeigt die Tendenz zur Bildung eines Lichtbogens an, dem mit der sogenannten Abhebestrategie begegnet wird. Durch das Abheben der Elektrode wird in bekannter Weise der Erodierprozeß für eine längere Zeit unterbrochen und die Spülung durch das Dielektrikum verstärkt.

In einer weiteren Ausgestaltung der Erfindung werden die Impulse der ersten Impulsgruppe nicht gezählt, ein Überschreiten einer Grenzanzahl von Impulsen dieser Gruppe bleibt unberücksichtigt. Die erste Impulsgruppe ist dadurch gekennzeichnet, daß sie einen einem Normalimpuls entsprechenden oder größeren Zündverzugsbereich aufweist. Diese Impulse sind unkritisch im Hinblick auf die Bearbeitungsqualität; auch bei gegenüber dem Normalimpuls größerem Zündverzug wird höchstens der Wirkungsgrad, nicht jedoch die Bearbeitungsqualität betroffen.

Die Messung der Zündverzugszeit erfolgt erfindungsgemäß in der Weise, daß bei der ansteigenden Flanke sowie bei der abfallenden Flanke jedes Impulses der Durchgang durch einen unteren Schwellenwert für die Spannung sowie einen oberen Schwellenwert für die Spannung festgehalten wird. Der untere Schwellenwert stellt eine Minimalspannung für die Arbeitsspannung dar, der obere Schwellenwert eine Minimalspannung für die Zündspannung. Aus diesen Durchgängen kann einerseits festgestellt werden, ob ein Arbeitsimpuls stattgefunden hat, andererseits, ob eine Zündspannung erreicht wurde und wie groß die Zündverzugszeit ist.

Zur Durchführung des beschriebenen Verfahrens ist erfindungsgemaß eine Einrichtung mit den im kennzeichenden Teil des Anspruches 8 enthaltenen Merkmalen vorgesehen.

Am Arbeitsspalt der Erodiermaschine ist eine Impuls-Selektionsstufe mit mehreren jeweils einer Impulsgruppe entsprechenden Ausgängen angeschlossen, die bei Auftreten eines Impulses einer zugehörigen Impulsgruppe jeweils einen Zählimpuls abgeben. Diese Zahlimpulse werden jeweils der Impuls-Selektionsstufe nachgeschaltetan parallelen Zählerstufen zugeführt. Diese Zählerstufen geben bei Erreichen der Grenzanzahl von Impulsen ein Übertragsignal ab, welche in den Zählerstufen jeweils nachgeordneten Steuereinrichtungen in einen Steuerbefehl für die Ansteuerung der Erodiermaschine umgeformt werden. Die Impulsselektion erfolgt durch eine Auswertung der Spannungsdurchgänge durch die vorne erwähnten Schwellenwerte. Diese Durchgänge werden von einem einen unteren Schwellenwert für die Impulsspannung definierenden Komparator sowie einem den oberen Schwellenwert für die Impulsspannung definierenden Komparator bestimmt, die der Impuls-Selektionsstufe vorgeschaltet sind.

Die Zählerstufen umfassen erfindungsgemäß jeweils einen an einem Ausgang der Impuls-Selektionsstufe angeschlossenen rückstellbaren Binärzähler, an welchem außerdem über ein Oder-Gatter die an den anderen Ausgängen der Selektionsstufe anliegenden Signale als Preset-Signale zugeführt werden. Der Binärzähler summiert die von der Selektionsstufe kommenden Signale auf, bis entweder die Grenzanzahl erreicht ist, oder bis er durch ein Impulssignal einer anderen Impulsgruppe auf seinen Ausgangswert zurückgesetzt wird, wie weiter hinten genauer beschrieben wird.

Allen Zählerstufen ist ein gemeinsames Zeitglied nachgeschaltet, welches bei einem von den Zählerstufen ausgehenden Übertragsignal für eine bestimmte Zeit die Zufuhr von Impulsen zum Arbeitsspalt unterbricht. Ein dem Zeitglied zusätzlich zugeführtes, vom Erodiergenerator kommendes Synchronisierungssignal bewirkt, daß der Ausblendbefehl sich auf volle Arbeitsimpulse verlängert. Dadurch werden zu kurze Arbeitsimpulse, die einen erhöhten Elektrodenverschleiß bewirken können, vermieden.

Ein zusätzliches Zeitglied ist vorzugsweise der der vierten Impulsgruppe zugeordneten Zählerstufe nachgeschaltet und dient dazu, den Vorschubantrieb der Elektrode im Sinne einer schnellen Spaltvergrößerung anzusteuern.

In einer weiteren Ausgestaltung der Erfindung sind an den Zählerstufen jeweils analoge Leuchtbandanzeigen zur Anzeige der jeweils aufeinanderfolgend gezählten Impulse jeder Impulsgruppe angeschlossen. Die Leuchtbandanzeige macht jeweils die maximale Aufsummierung von Impulsen der gleichen Gruppe und damit die Tendenz zur Prozeßentartung optisch erkennbar.

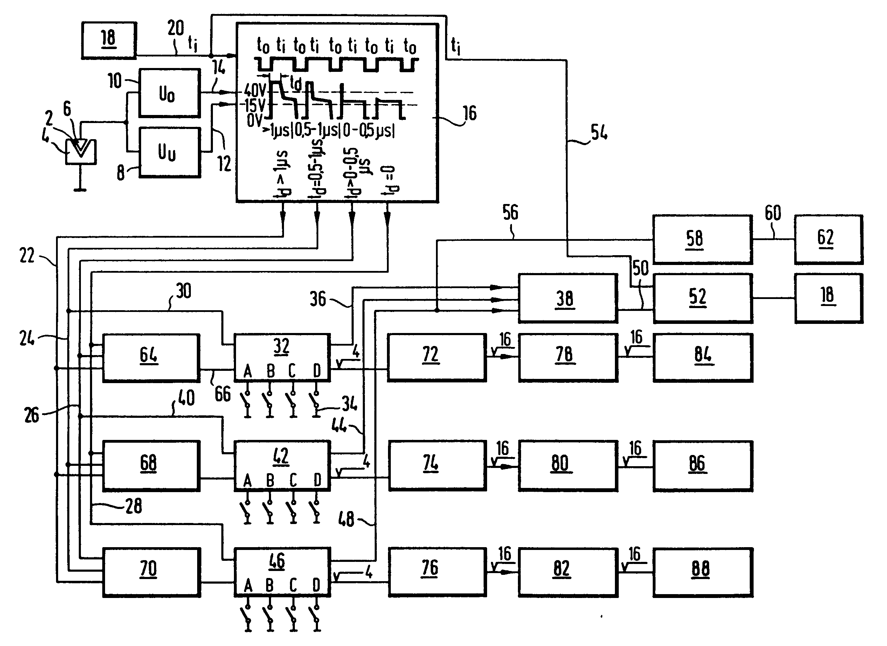

Ein Ausführungsbeispiel der erfindungsgemäßen Einrichtung ist in der Zeichnung dargestellt und im folgenden näher beschrieben. Die Zeichnung zeigt schematisch ein Schaltbild einer Überwachungseinrichtung, bei der vier Impulsgruppen gebildet werden.

Die am Arbeitsspalt 2 zwischen dem Werkstück 4 und der Elektrode 6 anliegende Impulsspannung wird zwei parallel geschalteten Komparatoren 8, 10 zugeführt. Der Komparator 8 definiert einen unteren Schwellenwert Uᵤ und gibt ein Signal ab, wenn die Impulsspannung diesen Schwellenwert durchläuft. Der Komparator 10 definiert einen oberen Schwellenwert Uₒ für die Impulsspannung und gibt ein Signal ab, wenn die Impulsspannung diesen Schwellenwert durchläuft. Der untere Schwellenwert ist beispielsweise 15 Volt der obere Schwellenwert 40 Volt. Die Signale der Komparatoren 8 bzw. 10 werden über Leitungen 12 bzw. 14 der Impuls-Selektionsstufe 16 zugeleitet. Außerdem wird der Impuls-Selektionsstufe 16 ein vom Generator Interface 18 kommendes, im Rythmus der Arbeitsimpulsfolge getaktetes Referenzsignal tᵢ über die Leitung 20 zugeführt.

In der Impuls-Selektionsstufe 16 werden vier Impulsgruppen gebildet, wobei der ersten Impulsgruppe die Impulse zugeordnet werden, deren Zündverzugszeit t_{d} größer als 1 µs ist; in der zweiten Impulsgruppe werden die Impulse mit t_{d} = 0,5 bis 1 µs, in der dritten Impulsgruppe die Impulse mit t_{d} größer als 0 bis 0,5 µs und in der vierten Impulsgruppe die Impulse mit t_{d} = 0 zusammengefaßt. Jeder Impuls der ersten Impulsgruppe erzeugt ein Zählsignal in der zugeordneten, von der Impulsselektionsstufe 16 ausgehenden Leitung 22, die Impulse der übrigen Impulsgruppen erzeugen jeweils Zählsignale in den diesen zugeordneten Leitungen 24, 26 und 28.

Die Zählimpulse der Leitung 22 werden nicht gezählt, da sie die Arbeitsqualität nicht beeinträchtigen und deshalb nicht unbedingt eine Veranlassung zu einem Eingriff in den Prozeß geben. Die Zählimpulse der Leitung 24 werden über die Leitung 30 einem 4-bit-Binärzähler 32 zugeführt. Dieser liefert, ausgehend von einer über die Preset-Schalter 34 willkürlich einstellbaren Ausgangszahl bei Erreichen der Zählziffer 16 ein Übertragsignal, welches über die Leitung 36 dem Oder-Gatter 38 zugeführt wird. Die Zählimpulse der Leitung 26 werden über eine Leitung 40 einem 4-bit-Binärzähler 42, die davon ausgehenden Übertragsignale über die Leitung 44 ebenfalls dem Oder-Gatter 38 zugeführt. Die Zählimpulse der Leitung 28 werden in der gleichen, oben beschriebenen Weise in einem 4-bit-Binärzähler 46 gezählt, wobei das Übertragsignal über eine Leitung 48 ebenfalls dem Oder-Gatter 38 zugeleitet wird.

Beim Auftreten eines Übertragsignals in einer der Leitungen 36, 44 oder 48 erzeugt das Oder-Gatter 38 einen Triggerimpuls, welcher über die Leitung 50 einer monostabilen Kippstufe 52 zugeführt wird. Dieser Triggerimpuls erzeugt demnach dann, wenn in der zweiten, dritten oder vierten Impulsgruppe eine bestimmte Grenzanzahl von Impulsen aufeinanderfolgend auftritt, ein Steuersignal, welches zu einer Unterbrechung der Zufuhr von Arbeitsimpulsen zum Arbeitsspalt für eine bestimmte Pausenzeit führt.

Der Kippstufe 52 wird außerdem über eine Leitung 54 das vom Generator Interface kommende Referenzsignal tᵢ zugeführt, welches dafür sorgt, daß die Unterbrechung der Zufuhr von Arbeitsimpulsen zum Arbeitsspalt nicht während der Signalzeit tᵢ stattfinden kann, da verkürzte Arbeitsimpulse einen erhöhten Verschleiß der Elektrode zur Folge haben können.

Wie die Figur zeigt, wird das Übertragsignal des Binärzählers 46 außerdem über eine Leitung 56 einer monostabilen Kippstufe 58 zugeführt, welche über die Leitung 60 ein Steuersignal an die Einrichtung 62 zur Vorschubregelung der Elektrode abgibt. Bei Auftreten eines Signals in der Leitung 60 wird die Elektrode beispielsweise zum Zwecke einer schnellen Spaltvergrößerung zurückgezogen und danach wieder in Arbeitsstellung gebracht.

Dem über die Leitung 24 angesteuerten Binärzähler 32 ist ein Oder-Gatter 64 vorgeschaltet, welches jeweils an die übrigen Leitungen 22, 26 und 28 angeschlossen ist. Jeder in diesen Leitungen auftretende Zählimpuls erzeugt in der Leitung 66 ein Preset-Signal, welches den Binärzähler 32 auf die Ausgangszahl zurücksetzt. Während also jeder in der Leitung 24 auftretende Zählimpuls dem Binärzähler 32 um eine Ziffer weiterschaltet, setzt jeder in den Leitungen 22, 26, 28 auftretende Zählimpuls diesen Binärzähler 32 wieder auf seine voreingestellte Ausgangszahl zurück. Dem Oder-Gatter 64 entsprechen die den Binärzählern 42 und 46 zugeordneten Oder-Gatter 68, 70, welche entsprechend jeweils bei Auftreten von Zählimpulsen in den von den zugeordneten Binärzählern nicht zu zählenden Signalen diesen auf seine Anfangszahl zurücksetzt.

Die Funktion der Einrichtung ist folgende: Alle am Arbeitsspalt 2 anliegenden Arbeitsimpulse werden in der Impulsselektionsstufe 16 einer der vier Impulsgruppen zugeordnet. Die hintereinander auftretenden Impulse der zweiten, dritten und vierten Impulsgruppe werden in den Binärzählern 32, 42 und 46 aufsummiert, bis sie entweder eine bestimmte Grenzanzahl erreichen oder bis der Binärzähler durch das Auftreten eines Impulses einer anderen Gruppe wieder auf seine Anfangszahl zurückgesetzt wird. Die Übertragsignale der Binärzähler 32, 42 und 46 wirken über das Oder-Gatter 38 und die Kippstufe 52 gleichwertig auf das der letzteren nachgeschaltete Generator-Interface 18 und führt zu der weiter vorne beschriebenen Strom-Pausen-Strategie. Speziell beim Auftreten eines Übertragsignals in der Leitung 48 wird über die Kippstufe 58 und die Einrichtung 62 zur Vorschubregelung zusätzlich eine sogenannte Abhebe-Strategie ausgelöst.

Um die Tendenz zur Prozeßentartung sichtbar zu machen, werden die Zählerstände der Binärzähler 32, 42 und 46 in diesen nachgeschalteten (16 aus 4)-Dekodern 72, 74 und 76 dekodiert und die Ausgangssignale, in diesen nachgeschalteten nachtriggerbaren Monoflops 78, 80, 82 mit jeweils 16 monostabilen Kippstufen verlängert und zur Ansteuerung von LED-Leuchtbandanzeigen 84, 86, 88 mit jeweils 16 LEDs verwendet. Diese zeigen jeweils an, wieviele Arbeitsimpulse der zweiten, dritten oder vierten Gruppe jeweils nacheinander auftreten, so daß an jeder Leuchtbandanzeige die maximale Aufsummierung von Impulsen der gleichen Gruppe sichtbar wird.

## Patentansprüche

1. Verfahren zum Überwachen eines Funkenerodierprozesses in einer Funkenerodiermaschine, wobei die Spannungsimpulse im Arbeitsspalt (2) unterschiedlichen Impulsgruppen zugeordnet werden, die jeweils durch bestimmte Zündverzugszeiten (t_{d}) gekennzeichnet sind, wobei ferner die Spannungsimpulse unterschiedlicher Impulsgruppen gezählt und wobei in Abhängigkeit von der Häufigkeit bestimmter Impulstypen Steuerbefehle für die Prozeßsteuerung erzeugt werden, dadurch **gekennzeichnet,** daß zwischen einer ersten Impulsgruppe mit Impulsen normaler oder demgegenüber größerer Zündverzugszeit (t_{d}>1µs) sowie einer letzten Impulsgruppe mit Impulsen verschwindender Zündverzugszeit (t_{d}=0) mehrere mittlere Impulsgruppen gebildet werden, die jeweils durch einen vorgegebenen Zündverzugszeitbereich (0.5µs<t_{d}<1µs; 0µs<t_{d}<0.5µs) gekennzeichnet sind, wobei zumindest die Impulse jeder der mittleren und der letzten Impulsgruppen gezählt werden und wobei bei Erreichen einer vorgegebenen Grenzanzahl von in ununterbrochener Folge auftretenden Impulsen einer dieser Impulsgruppen jeweils ein Steuerbefehl erzeugt wird.

2. Verfahren nach Anspruch 1, dadurch **gekennzeichnet,** daß Impulsgruppen mit aneinandergrenzenden, insgesamt den ganzen möglichen Zündverzugsbereich abdeckenden Zündverzugszeitbereichen gebildet werden.

3. Verfahren nach einem der Ansprüche 1 oder 2, dadurch **gekennzeichnet,** daß jeweils aufeinanderfolgende Impulse der verschiedenen Impulsgruppen in einer jeweils zugeordneten Zähleinrichtung (32, 42, 46) aufsummiert werden, und daß die aufsummierte Zahl von Impulsen einer Impulsgruppe jeweils bei Auftreten eines Impulses einer anderen Impulsgruppe und bei Erreichen der den Steuerbefehl auslösenden Grenzanzahl von Impulsen auf einen vorgegebenen Ausgangswert zurückgesetzt wird.

4. Verfahren nach einem der Ansprüche 1 bis 3, dadurch **gekennzeichnet,** daß die Steuerbefehle jeweils eine Unterbrechung der Zufuhr von Spannungsimpulsen zum Arbeitsspalt (2) bewirken.

5. Verfahren nach einem der Ansprüche 2 bis 4, dadurch **gekennzeichnet,** daß die bei Erreichen der Grenzanzahl von Impulsen der letzten Impulsgruppe ausgelösten Steuerbefehle ein Abheben der Elektrode (6) vom Werkstück (4) bewirken.

6. Verfahren nach einem der Ansprüche 2 bis 5, dadurch **gekennzeichnet,** daß die Impulse der ersten Impulsgruppe nicht gezählt werden und ein Überschreiten einer Grenzanzahl unberücksichtigt bleibt.

7. Verfahren nach einem der Ansprüche 1 bis 6, dadurch **gekennzeichnet,** daß zur Messung der Zündverzugszeit (t_{d}) jedes Impulses jeweils der Spannungsdurchgang durch einen unteren, einem Minimalspannungswert für einen wirksamen Arbeitsimpuls entsprechenden Schwellenwert (Uᵤ) sowie durch einen oberen, einem Minimalspannungswert für die Zündspannung entsprechenden Schwellenwert (Uₒ) gemessen und die Zeit (t_{d}) zwischen den Durchgängen durch den oberen Schwellenwert (Uₒ₎ bei Vorhandensein eines wirksamen Arbeitsimpulses gemessen wird.

8. Einrichtung zur Durchführung des Verfahrens nach einem der Ansprüche 1 bis 7, umfassend eine an den Arbeitsspalt (2) der Erodiermaschine angeschlossene Impuls-Selektionsstufe (16) zum Zuordnen jedes Impulses im Arbeitsspalt (2) zu einer durch eine bestimmte Zündverzugszeit gekennzeichneten Impulsgruppe, mit mehreren, jeweils einer Impulsgruppe entsprechenden Ausgängen (22, 24, 26, 28), ferner umfassend Zähleinrichtungen (32, 42, 46) zum Zählen der Impulsanzahl unterschiedlicher Impulsgruppen, sowie eine Steuereinrichtung (38, 52) zum Erzeugen von Steuersignalen in Abhängigkeit von der Häufigkeit der Impulse bestimmter Impulsgruppen, dadurch **gekennzeichnet,** daß mehrere zueinander parallel geschaltete voreinstellbare Zähleinrichtungen (32, 42, 46) vorgesehen sind, die jeweils an einen Ausgang (22, 24, 26, 28) der Selektionsstufe (16) angeschlossen sind, und daß die Zähleinrichtungen (32, 42, 46) jeweils mit der Steuereinrichtung (38, 52) zum Erzeugen des Steuersignals bei Erreichen einer voreingestellten Grenzanzahl von Impulsen verbunden sind.

9. Einrichtung nach Anspruch 8, dadurch **gekennzeichnet,** daß der Impuls-Selektionsstufe (16) ein erster, einen unteren Schwellenwert (Uᵤ) für die Impulsspannung definierender Komparator (8) und ein zweiter, einen oberen Schwellenwert (Uₒ) für die Impulsspannung definierender Komparator (10) zur Erkennung von wirksamen Arbeitsimpulsen sowie zur Bestimmung der Zündverzugszeit (t_{d}) vorgeschaltet sind.

10. Einrichtung nach einem der Ansprüche 8 oder 9, dadurch **gekennzeichnet,** daß die Zählerstufen jeweils aus einem an einem Ausgang der Impuls-Selektionsstufe (16) angeschlossenen rückstellbaren Binärzähler (32, 42, 46) bestehen, welchem außerdem über ein Oder-Gatter (64, 68, 70) die an den anderen Ausgängen der Selektionsstufe (16) anliegenden Signale als Preset-Signale zugeführt werden.

11. Einrichtung nach einem der Ansprüche 8 bis 10, dadurch **gekennzeichnet,** daß an den Zählerstufen (32, 42, 46) über ein Oder-Gatter ein Zeitglied (52) zur Erzeugung einer Pausenzeit am Arbeitsspalt (2) angeschlossen ist.

12. Einrichtung nach Anspruch 11, dadurch **gekennzeichnet,** daß dem Zeitglied (52) zusätzlich ein vom Erodiergenerator kommendes Synchronisierungs-Signal (tᵢ) zugeführt wird, welches bewirkt, daß die Pausenzeit am Arbeitsspalt auf volle Arbeitsimpulse verlängert wird.

13. Einrichtung nach einem der Ansprüche 8 bis 12, dadurch **gekennzeichnet,** daß an wenigstens einer, vorzugsweise der der vierten Impulsgruppe zugeordneten Zählerstufe (46) ein ein Abheben der Elektrode (6) vom Werkstück (4) bewirkendes Zeitglied (58) angeschlossen ist.

14. Einrichtung nach einem der Ansprüche 8 bis 13, dadurch **gekennzeichnet,** daß an den Zählerstufen (32, 42, 46) jeweils analoge Leuchtbandanzeigen (84, 86, 88) zur Anzeige der jeweils aufeinanderfolgend gezählten Impulse jeder Impulsgruppe angeschlossen sind.

## Claims

1. A method of monitoring a spark erosion process in a spark erosion machine, wherein the voltage pulses in the working gap (2) are allocated to different pulse groups which are each characterised by respective given firing delay times (t_{d}), wherein moreover the voltage pulses of different pulse groups are counted and wherein control commands for process control are produced in dependence on the frequency of given types of pulses, characterised in that formed between a first pulse group with pulses of a normal firing delay time or greater than same (t_{d}>1µs) and a last pulse group with pulses of insignificant firing delay time (t_{d} = 0) are a plurality of middle pulse groups which are each characterised by a respective predetermined firing delay time range (0.5µs<t_{d}<1µs; 0µs<t_{d}<0.5µs), wherein at least the pulses of each of the middle and the last pulse groups are counted and wherein a respective control command is produced upon the attainment of a predetermined limit number of pulses, occurring in uninterrupted succession, of one of said pulse groups.

2. A method according to claim 1 characterised in that pulse groups are formed with mutually adjoining firing delay time ranges which overall cover the entire possible firing delay range.

3. A method according to one of claims 1 and 2 characterised in that respectively successive pulses of the various pulse groups are summed in a respectively associated counting means (32, 42, 46) and that the summed number of pulses of a pulse group is reset to a predetermined initial value whenever a pulse of another pulse group occurs and when the limit number of pulses which triggers off the control command is attained.

4. A method according to one of claims 1 to 3 characterised in that the control commands respectively cause an interruption in the feed of voltage pulses to the working gap (2).

5. A method according to one of claims 2 to 4 characterised in that the control commands which are triggered off upon the attainment of the limit number of pulses of the last pulse group cause the electrode (6) to lift away from the workpiece (4).

6. A method according to one of claims 2 to 5 characterised in that the pulses of the first pulse group are not counted and the fact of exceeding a limit number remains ignored.

7. A method according to one of claims 1 to 6 characterised in that, for the purposes of measuring the firing delay time (t_{d}) of each pulse the respective voltage passage through a lower threshold value (Uᵤ) corresponding to a minimum voltage value for an operative working pulse and through an upper threshold value (Uₒ) corresponding to a minimum voltage value for the firing voltage is measured and the time (t_{d}) between the passages through the upper threshold value (Uₒ) when an operative working pulse is present is measured.

8. Apparatus for carrying out the method according to one of claims 1 to 7 including a pulse selection stage (16) connected to the working gap (2) of the erosion machine for allocating each pulse in the working gap (2) to a pulse group characterised by a given firing delay time, having a plurality of outputs (22, 24, 26, 28) each corresponding to a respective pulse group, and further including counting means (32, 42, 46) for counting the number of pulses of different pulse groups, and a control means (38, 52) for producing control signals in dependence on the frequency of the pulses of given pulse groups, characterised in that there are provided a plurality of presettable counting means (32, 42, 46) which are connected in parallel with each other and which are each connected to a respective output (22, 24, 26, 28) of the selection stage (16), and that the counting means (32, 42, 46) are respectively connected to the control means (38, 52) for producing the control signal upon the attainment of a preset limit number of pulses.

9. Apparatus according to claim 8 characterised in that connected on the input side of the pulse selection stage (16) are a first comparator (8) defining a lower threshold value (Uᵤ) for the pulse voltage and a second comparator (10) defining an upper threshold value (Uₒ) for the pulse voltage for recognising operative working pulses and for determining the firing delay time (t_{d}).

10. Apparatus according to one of claims 8 and 9 characterised in that the counter stages each comprise a resettable binary counter (32, 42, 46) which is connected to a respective output of the pulse selection stage (16) and which in addition receives by way of an or-gate (64, 68, 70) the signals at the other outputs of the selection stage (16), as preset signals.

11. Apparatus according to one of claims 8 to 10 characterised in that a timing member (52) for producing a pause time at the working gap (2) is connected to the counter stages (32, 42, 46) by way of an orgate.

12. Apparatus according to claim 11 characterised in that the timing member (52) is additionally supplied with a synchronisation signal (tᵢ) which comes from the erosion generator and which causes the pause time at the working gap to be prolonged to full working pulses.

13. Apparatus according to one of claims 8 to 12 characterised in that a timing member (58) which causes the electrode (6) to be lifted away from the workpiece (4) is connected to at least one counter stage, preferably the counter stage (46) associated with the fourth pulse group.

14. Apparatus according to one of claims 8 to 13 characterised in that connected to the counter stages (32, 42, 46) are respective analog light-emitting strip displays (84, 86, 88) for displaying the respectively successively counted pulses of each pulse group.

## Revendications

1. Procédé pour contrôler un processus d'étincelage dans une machine d'étincelage, selon lequel les impulsions de tension dans la fente de travail (2) sont associées à différents groupes d'impulsions, qui sont caractérisés respectivement par des retards d'amorçage déterminés (t_{d}), les impulsions de tension de différents groupes d'impulsions sont en outre comptées et des instructions de commande pour la commande du processus sont produites en fonction de la fréquence de types déterminés d'impulsions, caractérisé en ce qu'entre un premier groupe d'impulsions comportant des impulsions présentant un retard d' amorçage normal ou un retard d'amorçage superieure ( t_{d} > 1 µs) par rapport au retard normal, ainsi qu'un dernier groupe d'impulsions présentant un retard d'amorçage qui disparaît (t_{d} = 0), an forme plusieurs groupes médians d'impulsions **qui sont** caractérisés respectivement par une gamme prédéterminée de retards d'amorçage (0,5 µs < t_{d} < 1 µs; 0 µs < t_{d} < 0,5 µs), au moins les impulsions de chacun des groupes médians d'impulsions et des derniers groupes d'impulsions étant comptés et, lorsque le nombre limite prédéterminé d'impulsions, qui apparaissent selon une suite ininterrompue, de l'un de ces groupes d' impulsions, est atteint une instruction de commande étant respectivement produite.

2. Procédé selon la revendication 1, caractérisé en ce que des groupes d'impulsions sont formés avec des gammes contiguës de retards d'amorçage, qui couvrent globalement l'ensemble de la gamme possible des retards d'amorçage.

3. Procédé selon l'une des revendications 1 ou 2, caractérisé en ce que des impulsions successives respectives des différents groupes d'impulsions sont additionnées dans un dispositif respectif associé de comptage (32, 42, 46), et que le nombre fourni par l'addition d'impulsions d'un groupe d'impulsions est ramené à une valeur initiale prédéterminée respectivement lors de l'apparition d'une impulsion d'un autre groupe d'impulsions et lorsque le nombre limite d'impulsions, qui déclenche l'instruction de commande, est atteint.

4. Procédé selon l'une des revendications 1 à 3, caractérisé en ce que les instructions de commande déclenchent respectivement une interruption de l'envoi d'impulsions de tension à la fente de travail (2).

5. Procédé selon l'une des revendications 2 à 4, caractérisé en ce que les instructions de commande, qui sont déclenchées lorsque le nombre limite d'impulsions du dernier groupe d'impulsions est atteint, déclenchent un écartement de l'électrode (6) de la pièce à traiter (4).

6. Procédé selon l'une des revendications 2 à 5, caractérisé en ce que les impulsions du premier groupe d'impulsions ne sont pas comptées et qu'un dépassement d'un nombre limite n'est pas pris en compte.

7. Procédé selon l'une des revendications 1 à 6, caractérisé en ce que pour la mesure du retard d'amorçage (t_{d}) de chaque impulsion, on mesure respectivement le passage de la tension par une valeur de seuil inférieure (Uᵤ), qui correspond à une valeur de tension minimale pour une impulsion active de travail, ainsi que par une valeur de seuil supérieure (Uₒ), qui correspond à une valeur de tension minimale pour la tension d'amorçage, et on mesure la durée (t_{d}) entre les passages par la valeur de seuil supérieure (Uₒ), lors de la présence d'une impulsion de travail active.

8. Dispositif pour la mise en oeuvre du procédé selon l'une des revendications 1 à 7, comportant un étage (16) de sélection d'impulsions, qui est raccordé à la fente de travail (2) de la machine d'étincelage, pour l'association de chaque impulsion dans la fente de travail (2) à un groupe d'impulsions caractérisé par un retard d'amorçage déterminé, présentant plusieurs sorties (22, 24, 26, 28), qui correspondent respectivement à un groupe d'impulsions, et en outre des dispositifs de comptage (32, 42, 46) pour compter le nombre d'impulsions de groupes différents d'impulsions, ainsi qu'un dispositif de commande (38, 52) pour produire des signaux de commande en fonction de la fréquence des impulsions de groupes déterminés d'impulsions, caractérisé en ce qu'il est prévu plusieurs dispositifs de comptage préréglables (32, 42, 46), qui sont branchés en parallèle et sont raccordés respectivement à une sortie (22, 24, 26, 28) de l'étage de sélection (16), et que les dispositifs de comptage (32, 42, 46) sont raccordés respectivement au dispositif de commande (38, 52) pour produire le signal de commande lorsqu'un nombre limite préréglé d'impulsions est atteint.

9. Dispositif selon la revendication 8, caractérisé en ce qu'en amont de l'étage de sélection d'impulsions (16) sont branchés un premier comparateur (8), qui définit une valeur de seuil inférieure (Uᵤ) pour la tension impulsionnelle, et un second comparateur (10) qui définit une valeur de seuil supérieure (Uₒ) pour la tension impulsionnelle **pour** identifier des impulsions de travail actives ainsi que déterminer le retard d'amorçage (t_{d}).

10. Dispositif selon l'une des revendications 8 et 9, caractérisé en ce que les étages de comptage sont constitués respectivement par un compteur binaire (32, 42, 46), qui peut être ramené à zéro, est raccordé à une sortie de l'étage de sélection d'impulsions (16) et auquel en outre les signaux appliqués aux autres sorties de l'étage de sélection (16) sont envoyés, en tant que signaux de préréglage, par l'intermédiaire d'une porte OU (64, 68, 70).

11. Dispositif selon l'une des revendications 8 à 10, caractérisé en ce qu'un circuit de temporisation (52) servant à produire un temps de pause dans la fente de travail (2) est raccordé aux étages de comptage (32, 42, 46) par l'intermédiaire d'une porte OU.

12. Dispositif selon la revendication 11, caractérisé en ce qu'au circuit de temporisation (52) est en outre envoyé un signal de synchronisation (tᵢ), qui est délivré par le générateur d'étincelage et agit de manière à prolonger le temps de pause dans la fente de travail, sur des impulsions de travail complètes.

13. Dispositif selon l'une des revendications 8 à 12, caractérisé en ce qu un circuit de temporisation (58), qui déclenche un écartement de l'électrode (6) de la pièce à traiter (4), est raccordé à au moins un étage de comptage (46), de préférence l'étage de comptage associé au quatrième groupe d'impulsions.

14. Dispositif selon l'une des revendications 8 à 13, caractérisé en ce qu aux étages de comptage (32, 42, 46) sont raccordés respectivement des dispositifs d'affichage analogiques à bande luminescente (84, 86, 88) servant à afficher les impulsions, comptées respectivement en séquence, de chaque groupe d'impulsions.
